# EUROPEAN PATENT SPECIFICATION

(11) **EP 3 144 761 B1**
(45) Date of publication and mention of the grant of the patent: **03.07.2019**
(21) Application number: 14891805.5
(22) Date of filing: 13.05.2014
(51) Int. Cl.: G05B 19/418, G06Q 10/04

(54) **DEVICE THAT ASSISTS WORKER WHO COLLECTS WASTE MATERIAL FROM PLURALITY OF PRODUCTION DEVICES**
HILFSVORRICHTUNG FÜR ARBEITER BEIM SAMMELN VON ABFALLMATERIAL AUS MEHREREN HERSTELLUNGSVORRICHTUNGEN
DISPOSITIF D'ASSISTANCE DE TRAVAILLEUR QUI COLLECTE DES DÉCHETS PROVENANT D'UNE PLURALITÉ DE DISPOSITIFS DE PRODUCTION

(43) Date of publication of application: 22.03.2017
(73) Proprietor: FUJI Corporation, Chiryu Aichi (JP)
(72) Inventor: SHIMIZU Koji, Chiryu Aichi (JP)
(74) Representative: Grünecker Patent- und Rechtsanwälte PartG mbB
(86) International application number: PCT/JP2014/062712
(87) International publication number: WO 2015/173888

(56) References cited:
- WO-A1-2006/067829
- WO-A1-2014/049871
- JP-A- 2007 095 761
- JP-A- 2010 176 253
- Panchamgam: "The Hierarchical Traveling Salesman Problem", , 1 November 2011 (2011-11-01), pages 1-18, XP055341677, Retrieved from the Internet: URL:http://scholar.rhsmith.umd.edu/sites/d efault/files/bgolden/files/final_the_hiera rchical_traveling_salesman_problem.pdf [retrieved on 2017-02-02]
- EL-SHERBENY ET AL: "Vehicle routing with time windows: An overview of exact, heuristic and metaheuristic methods", MAGALLAT GAMI'AT AL-MALIK SA'UD. AL-'ULUM - JOURNAL OF KING SAUDUNIVERSITY. SCIENCE, GAMI'AT AL-MALIK SA'UD, RIYAD, SA, vol. 22, no. 3, 1 July 2010 (2010-07-01), pages 123-131, XP027121933, ISSN: 1018-3647 [retrieved on 2010-04-07]
- HAMIDZADEH B ET AL: "Adaptive planning and scheduling in dynamic task domains", ROBOTICS AND AUTOMATION, 1996. PROCEEDINGS., 1996 IEEE INTERNATIONAL C ONFERENCE ON MINNEAPOLIS, MN, USA 22-28 APRIL 1996, NEW YORK, NY, USA,IEEE, US, vol. 3, 22 April 1996 (1996-04-22), pages 2529-2534, XP010163080, DOI: 10.1109/ROBOT.1996.506543 ISBN: 978-0-7803-2988-1
- M.A.A MAMUN ET AL: "Real time bin status monitoring for solid waste collection route optimization", 5TH BRUNEI INTERNATIONAL CONFERENCE ON ENGINEERING AND TECHNOLOGY (BICET 2014), 1 January 2014 (2014-01-01), page 1.23, XP055470798, Stevenage, UK DOI: 10.1049/cp.2014.1077 ISBN: 978-1-84919-991-9
- Hugo Peixoto: "Optimization of municipal solid waste collection routes based on the containers' fill status data", , 28 June 2010 (2010-06-28), pages i-xviii,1-82, XP055470787, Retrieved from the Internet: URL:https://repositorio-aberto.up.pt/bitst ream/10216/59440/1/000144450.pdf [retrieved on 2018-04-26]

## Description

### Technical Field

The present application relates to a device for assisting an operator to collect waste material from multiple production devices that configure an industrial product production system.

### Background Art

A production device for producing surface mounted component boards is disclosed in JP-A-2007-95761. This production device is provided with a collecting section that collects tape type waste material. Waste material collected in the collecting section is then collected by an operator.

Panchamgam, "The Hierarchical Traveling Salesman Problem", discloses a method that is called the hierarchical travelling salesman problem and that relates to the fundamental trade-off between efficiency and priority in humanitarian relief and related routing problems.

EL-SHERBENY ET AL, "Vehicle routing with time windows: An overview of exact, heuristic and metaheuristic methods", MAGALLAT GAMI'AT AL-MALIK SA'UD. AL-'ULUM - JOURNAL OF KING SAUDUNIVERSITY. SCIENCE, GAMI'AT AL-MALIK SA'UD, RIYAD, SA, vol. 22, no. 3, ISSN 1018-3647, discloses a method for the vehicle routing problem with time windows.

HAMIDZADEH B ET AL, "Adaptive planning and scheduling in dynamic task domains", ROBOTICS AND AUTOMATION, 1996. PROCEEDINGS., 1996 IEEE INTERNATIONAL C ONFERENCE ON MINNEAPOLIS, MN, USA 22-28 APRIL 1996, NEW YORK, NY, USA,IEEE, US, discloses a formal model of a dynamic environment for a routing problem on a graph representation of a task.

It is the object of the present invention to provide an improved system for assisting an operator to efficiently collect waste material from multiple production devices.

This object is solved by the subject matter of the independent claims.

Embodiments are defined by the dependent claims.

In factories for industrial products, many production devices are used and it is desirable that operators efficiently collect waste material that occurs at the multiple production devices. The present application discloses technology for assisting an operator to collect waste material from multiple production devices.

### Means for Solving the Problem

To solve the above problem, the present application discloses a device for assisting an operator to collect waste material from multiple production devices that configure an industrial product production system. This assisting device is provided with a selecting means that selects work target production devices, from which an operator should collect waste material, from among the multiple production devices, based on a signal sent from each of the production devices; an order determining means that determines at least a portion of a work order in which the operator should collect waste material of the work target production devices selected by the selecting means; and an indicating means that indicates to the operator at least a portion of the work order determined by the order determining means. According to such a configuration, an operator is able to efficiently collect waste material from multiple production devices based on an indicated work order.

Here, work of collecting waste material from a production device may be performed by a robot, not just by a person. Thus, in this application, the term operator is not restricted to a person and includes a robot (moving-type device). That is, the assisting device disclosed in this application may assist a person or a robot to collect waste material from multiple production devices.

### Brief Description of Drawings

Fig. 1 conceptually shows items arranged on a first floor of a factory, which form a portion of a production system to which the assisting device is applied.
Fig. 2 conceptually shows items arranged on a second floor of a factory, which form a portion of a production system to which the assisting device is applied.
Fig. 3 conceptually shows the mechanical configuration of a production device (component mounting device).
Fig. 4 is a block diagram showing the configuration of the assisting device.
Fig. 5 is data created by the assisting device that indicates production devices that have outputted a first signal or a second signal.
Fig. 6 is an example of a work order decided by the assisting device.
Fig. 7 shows a portion of a work order and movement path decided by the assisting device that are the work order and movement path for the first floor of the factory.
Fig. 8 shows a portion of a work order and movement path decided by the assisting device that are the work order and movement path for the second floor of the factory.
Fig. 9 shows a portion of a work order and movement path after correction that are the work order and movement path for the first floor of the factory.
Fig. 10 shows a portion of a work order and movement path after correction that are the work order and movement path for the second floor of the factory.

### Description of Embodiments

In an embodiment of the technology disclosed herein, the signal sent from the production device desirably includes a signal that corresponds to the amount of waste material that has accumulated in the production device. In this case, the production device may output the signal based on a detected amount of the amount of waste material, a production amount of the production device, operating time of the production device, or operating amount (or operating occurrences) of the device that generates the waste material in the production device.

In the above embodiment, the signal outputted from the production device desirably includes a first signal when the amount of waste material accumulated in the production device (an estimated value may be used) is greater than a first specified amount. In this case, the selecting means desirably selects a production device that outputs the first signal as a work target production device.

In the above embodiment, the signal outputted from the production device desirably includes a second signal when the amount of waste material accumulated in the production device (an estimated value may be used) is smaller than the first specified amount and greater than a second specified amount. In this case, the selecting means desirably additionally selects as a work target production device a production device that has a specified positional relationship with respect to the earlier selected production device from among the production devices that output the second signal. According to such a configuration, the assisting device, when indicating a work order to an operator, is able to indicate to the operator production devices for which collecting of waste material will soon be required, from among the production devices within the vicinity of the operator. By this, the operator is able to perform work efficiently because there is no need to return to the same place later.

Examples of a production device with the above specified positional relationship include, but are not restricted to, an adjacent production device, a production device on the opposite side of an aisle, a production device within a specified distance, a production device within a specified movement path distance, a production device in the same production line, and a production device on the same production floor.

In addition to or instead of the above, the selecting means desirably selects as a work target production device a production device that is on a movement path of the operator decided from the production order from among the production devices that output the second signal. According to such a configuration as well, the assisting device, when indicating a work order to an operator, is able to indicate to the operator production devices for which collecting of waste material will soon be required, from among the production devices within the vicinity of the operator.

In an embodiment of the technology disclosed herein, the order determining means desirably determines at least the first production device from which an operator should collect waste material from among the work target production devices selected by the selecting means. That is, it is not essential for the order determining means to determine the order for all of the work target production devices at the same time. For example, the order determining means may determine a single or multiple production devices on which an operator should perform work each time after an operator completes work with respect to that single or multiple production devices.

In an embodiment of the present technology, it is desirable that the order determining means stores arrangement information that contains the positional relationship between multiple production devices, and determines the order using this arrangement information. In this case, the arrangement information may store the positions of multiple production devices along with aisles for operators, or may be information that contains each of the moving distances between any two production devices.

In the above embodiment, it is desirable for the order determining means to be able to determine the work order such that the moving distance or moving time of an operator is minimized. According to such a configuration, it is possible for the operator to perform work of collecting waste material from work target production devices in the most efficient manner.

In addition to or instead of the above, the order determining means desirably is able to determine the work order such that the planned arrival time of the operator is within a first specified time from the sending of the signal from each of the work target production devices. According to such a configuration, it is possible to prevent a situation in which a production device stops because waste material has accumulated.

In addition to the above, the order determining means desirably performs correction of the work order each time after a second specified time has elapsed, the second specified time being shorter than the first specified time from the sending of the signal from each of the work target production devices. According to such a configuration, when work by an operator is later than planned, stopping of a production device due to waste material is prevented in advance by informing the operator of a new work order. As an example, in a work order after correction, a production device for which the second specified time has elapsed may be made the first work target.

In an embodiment of the present technology, the order determining means desirably redetermines the work order when a work target production device is newly selected by the selecting means. According to such a configuration, it is possible to indicate an appropriate work order to an operator according to a work target production device that arises irregularly.

In an embodiment of the present technology, it is desirable that the order determining means stores a reference position of the operator and is able to determine a work order that takes the reference position as an origin. In this case, the order determining means may store multiple reference positions and selectively use one of the reference positions according to, for example, an instruction of an operator or a time period.

In an embodiment of the present technology, it is desirable that the order determining means is able to detect or estimate the position of an operator, and is able to decide a work order using that estimated or detected current position as an origin. According to such a configuration, it is possible indicate an appropriate work order to an operator according to the actual position of the operator. Here, the order determining means may use the position of a production device at which the operator last performed work as an estimate of the actual position of the operator. Alternatively, the order determining means may detect the actual position of an operator using a mobile communication device (for example, a mobile phone, smartphone, or tablet) on the operator's person.

In an embodiment of the present technology, the order determining means desirably, in addition to the work order, determines the movement path of an operator with respect to at least a portion of that work order. In this case, the indicating means desirably also indicates the movement path determined by the order determining means. According to such a configuration, it is possible for an operator to collect waste material from work target production devices using an appropriate order and path.

The present technology may be applied widely to production systems that produce a variety of industrial products such as mechanical products, electrical products, and chemical products; herein the present technology is a production system for surface mounted component boards that are circuit boards mounted with electronic components, and is able to be favorably applied to a production system provided with multiple production devices including a component mounting device.

Herein, a production device includes various types of devices used in production systems of industrial products, such as machine tools, assembly devices, heat treatment devices, inspection devices, and conveyance devices.

### Embodiments

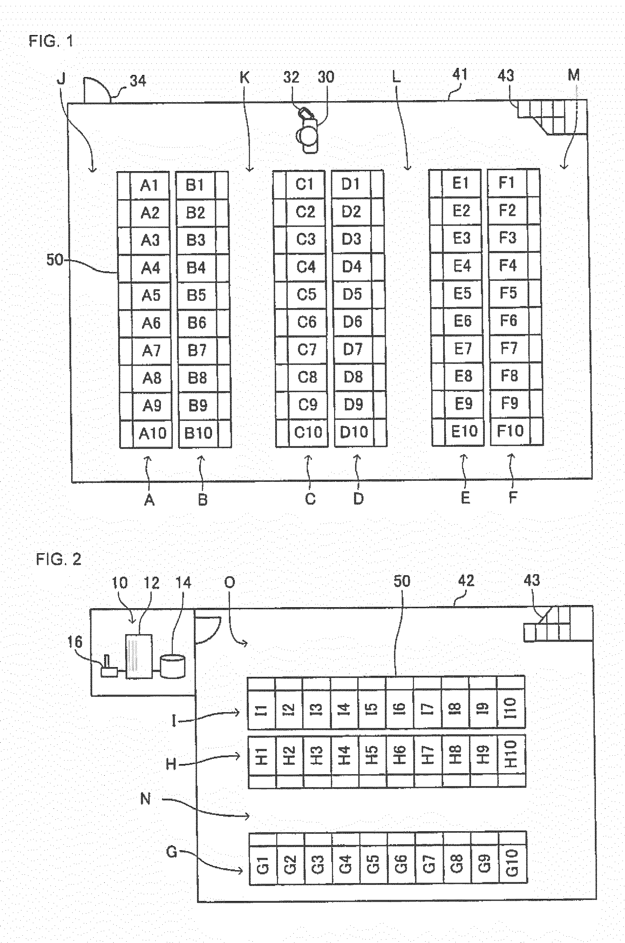

An embodiment, assisting device 10, is described below with reference to the figures. As shown in figs. 1 and 2, assisting device 10 of an embodiment assists operator 30 to collect waste material generated by multiple production devices 50 in a production system for industrial products, here surface mounted component boards. As shown in fig. 2, assisting device 10 is configured from a computer, and is provided mainly with processing device 12, storage device 14, and communication interface 16. Assisting device 10 is connected, via communication interface 16, to all production devices 50 and electronic communication terminals 32 carried by operators 30.

Described first is the production system of the surface mounted component boards. The production system is provided with multiple production devices 50. Each production device 50 is, for example, a component mounting device that mounts electronic components on a circuit board. The production system is provided with nine production lines, A to I, with each production line A to I including ten production devices 50. Six production lines, A to F, are arranged on first floor 41 of the factory, and three production lines, G to I are arranged on second floor 42 of the factory. First floor 41 and second floor 42 of the factory are connected by stairs 43.

As shown in fig. 1, on first floor 41 of the factory, production line A is arranged along aisle J. Production line B and production line C are arranged along aisle K facing each other on either side of aisle K. Production line D and production line E are arranged along aisle L facing each other on either side of aisle L. Production line F is arranged along aisle M. Aisles J to M are parallel to each other and extend in the north-south direction. As shown in fig. 2, on second floor 42 of the factory, production line G and production line H are arranged along aisle N facing each other on either side of aisle N. Production line I is arranged along aisle O. Aisles N and O are parallel to each other and extend in the east-west direction.

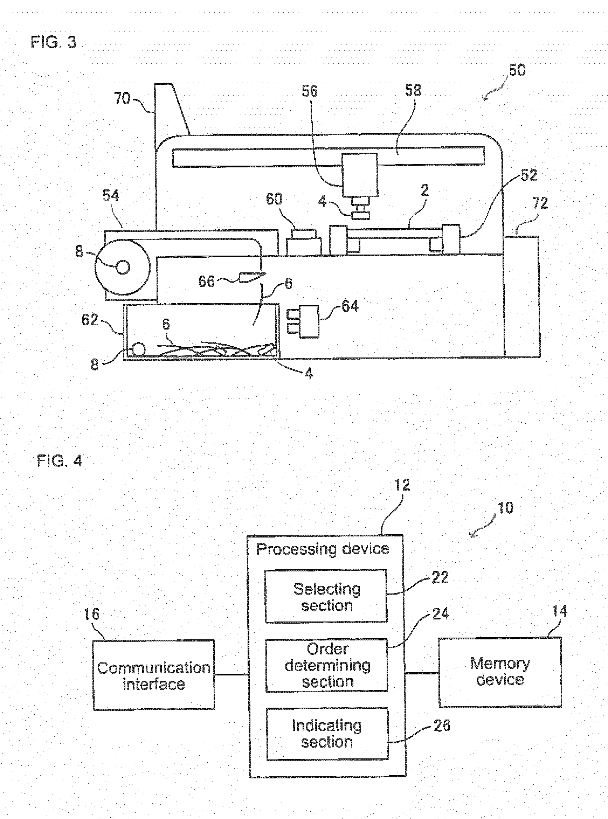

Production device 50 will be described with reference to fig. 3. As described above, production device 50 in the embodiment is a component mounting device that mounts electronic components 4 on circuit board 2. The description herein gives one example of production device 50 and is not intended to limit production device 50.

As shown in fig. 3, production device 50 is provided with conveyor 52 that supports circuit board 2, multiple component feeders 54 that supply electronic components 4, and head 56 that mounts electronic components 4 supplied by component feeders 54 on circuit board 2 that is on conveyor 52. Also, production device 50 is provided with moving device 58 that moves head 56, and camera 60 for determining whether electronic component 4 held by head 56 is good or bad. In addition to these, production device 50 may be provided with various devices such as a nozzle exchange device and a dip flux unit. Further, production device 50 is provided with touch panel 70 and control device 72. Touch panel 70 is a user interface that receives instructions from operator 30 and a display device that displays various information to operator 30. Control device 72 controls operation of production device 50.

Production device 50 is also provided with waste material box 62, sensor 64 that detects the collection amount of waste material box 62, and tape cutter 66 that cuts waste tape 6 generated by component feeders 54. Waste material box 62 collects waste material that occurs at production devices 50. For example, waste material box 62 collects as waste material waste tape 6 and tape reel 8 generated by component feeders 54. Also, waste material box 62 collects as waste material tape electronic components 4 that fall from head 56, and electronic components 4 designated as defective by camera 60. Waste material is collected from waste material box 62 by an operator. That is, assisting device 10 of the embodiment assists operator 30 who collects waste material from waste material box 62 of multiple production devices 50. Note that, waste material box 62 is an example of a collecting section that collects waste material. Production device 50, in addition to or instead of waste material box 62, may be provided with a waste material tray, waste material conveyor, waste material bag, or other such collecting section.

Sensor 64 detects at least whether the amount of waste material inside waste material box 62 is greater than a first specified amount. Also, sensor 64 of the embodiment is able to detect whether the amount of waste material inside waste material box 62 is smaller than the first specified amount and greater than a second specified amount. A detection result of sensor 64 is inputted to control device 72. Control device 72 sends a specified signal to assisting device 10 based on the detection result of sensor 64. That is, control device 72 sends a first signal to assisting device 10 when the amount of waste material inside waste material box 62 is greater than the first specified amount. Also, control device 72 sends a second signal to assisting device 10 when the amount of waste material inside waste material box 62 is smaller than the first specified amount and greater than the second specified amount. Note that, control device 72 may selectively send the first signal and the second signal by estimating the amount of waste material inside waste material box 62 based on an indication other than a detection result of sensor 64 (for example, production amount of production device 50, operating time of production device 50, operating occurrences of tape cutter 66).

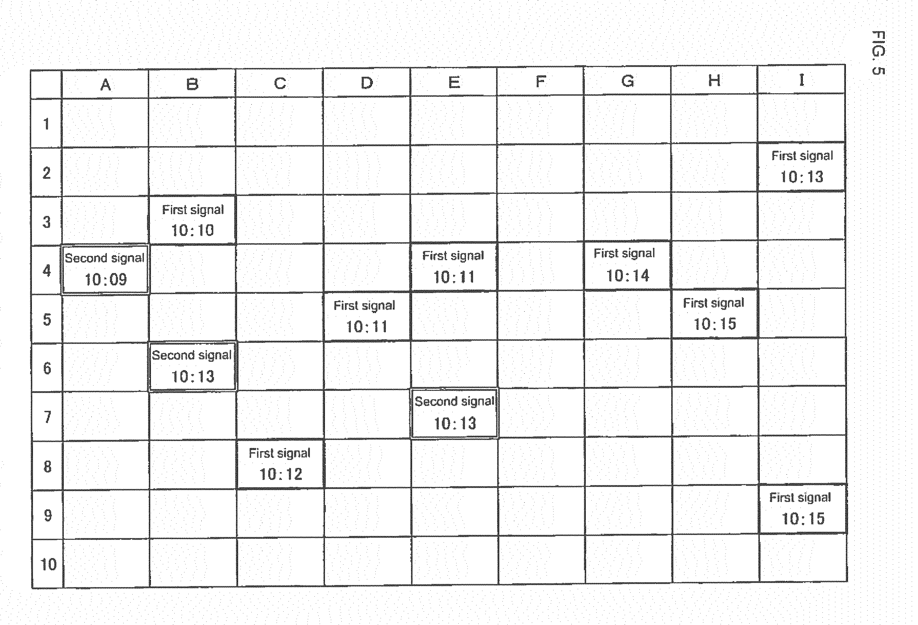

Next, assisting device 10 will be described with reference to fig. 4. Assisting device 10 receives, via communication interface 16, first signals and second signals sent by each production device 50. Assisting device 10, after receiving a first second or a second signal, stores the production device 50 that sent the signal and the sending time in storage device 14. By this, data shown in fig. 5 is created in storage device 14 such that the state of each production device 50 is monitored.

Data in storage device 14 is processed by processing device 12. Function-wise, processing device 12 is provided with selecting section 22, order determining section 24, and indicating section 26. Note that, these sections 22, 24, and 26 are each configured from hardware and software of processing device 12. Selecting section 22 selects work target production devices 50, from which operator 30 should collect waste material, based on data from storage device 14. First, selecting section 22 selects production devices outputting the first signal as work targets. For example, for the data shown in fig. 5, production devices 50 positioned at B3, C8, D5, E4, G4, H5,12, and 19 are selected. Here, position B3, for example, is the third production machine 50 from the north side in production line B.

Next, as additional processing, selecting section 22, from the production devices 50 sending the second signal, selects those positioned in the same production line as one of the already selected production devices 50. For example, for the data shown in fig. 5, production devices 50 positioned at B6 and E7 are also selected as work targets. For example, production device 50 positioned at B6 is sending the second signal, so collection of waste material will soon be necessary from this production device. For this type of production device 50, it is desirable for operator 30 to collect waste material at the same time as collecting waste material from production device 50 positioned at B3; by this, operator 30 is able to perform work efficiently.

After selecting section 22 selects work target production devices 50, order determining section 24 determines the work order and movement path for waste material that should be collected by operator 30 based on the work target production devices 50. Order determining section 24 stores arrangement information of the multiple production devices 50 (that is, layout information of the factory), and is able to calculate the minimum movement distance and movement path between any two production devices 50. First, order determining section 24 determines the work order and movement path for the work target production devices 50 such that the movement distance (or movement time) for operator 30 is short. At this time, order determining section 24 determines the work order and movement path using an origin of factory entrance 34 as a reference position stored in advance. However, order determining section 24 may determine the work order and movement path with the actual position of operator 30 as an origin. Order determining section 24 may detect the actual position of operator 30 using electronic communication terminal 32 carried by operator 30. Alternatively, order determining section 24 may estimate the actual position of operator 30 from the position of production device 50 from which operator 30 last collected waste material.

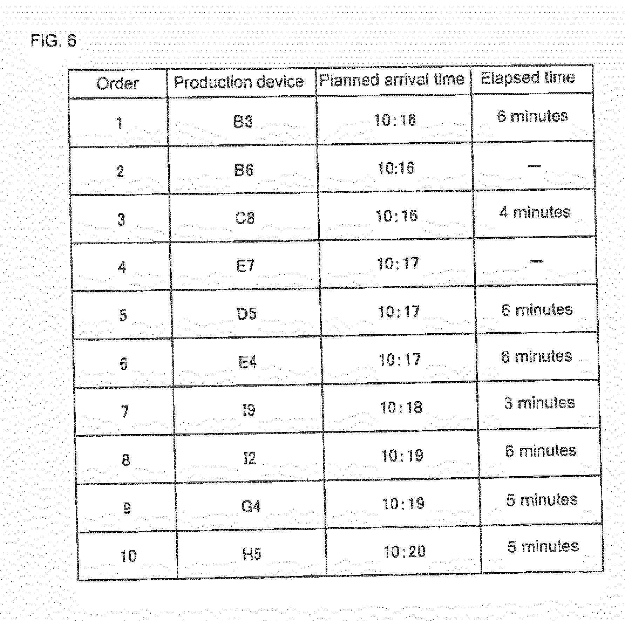

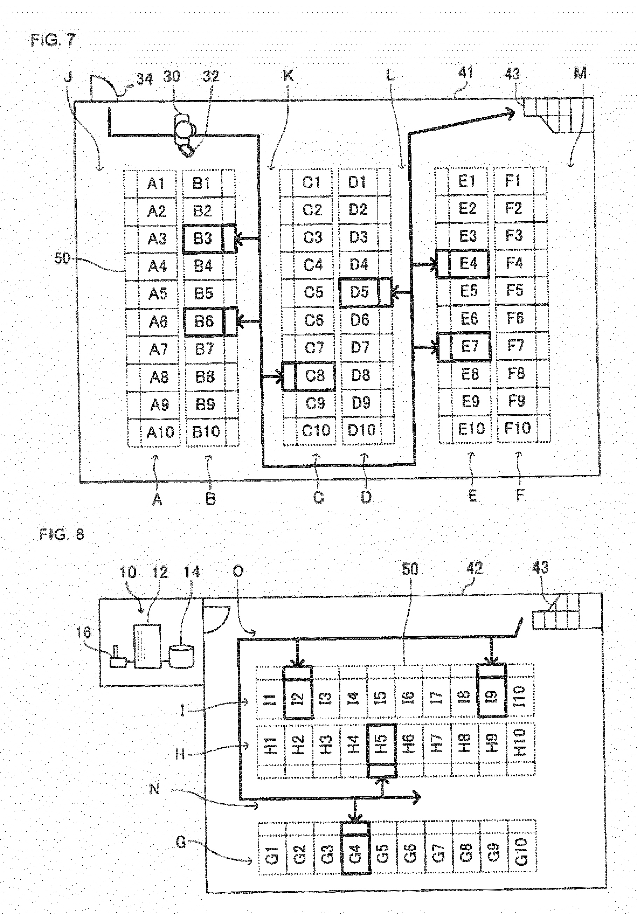

Figs. 6, 7, and 8 show an example of a work order decided by order deciding section 24. Here, as shown in fig. 6, order determining section 24 calculates a planned arrival time of operator 30 and an elapsed time from the sending time of the first signal to the planned arrival time for each production device 50. Then, order determining section 24, in a case in which the elapsed time exceeds the first specified time (for example, ten minutes) for at least one production device 50, performs correction of the work order by advancing the position in the work order of that production device 50. By this, order determining section 24 is able to decide the work order and movement path such that the planned arrival time of operator 30 at each production device 50 is within the first specified time from the sending of the first signal. Note that, order determining section 24 may decide only the work order, it is not necessary for order determining section 24 to decide the movement path. Further, it is not necessary for order determining section 24 to determine the work order for all work target production devices 50, so long as order determining section 24 determines the first production device 50 from which operator 30 should collect waste material.

After order determining section 24 has determined the work order and movement path, selecting section 22 may perform processing for newly selecting a single or multiple production devices 50 based on the movement path that was determined. In this case, selecting section 22 may newly determine, from among the production devices 50 sending the second signal, production devices 50 on the determined movement path as work targets. According to such a configuration, operator 30 is able to collect waste material from production devices 50 that will soon require waste to be collected while going to perform work as instructed. Because there is no need for operator 30 to return to such a production device 50, operator 30 is able to perform work efficiently.

After order determining section 24 determines the work order and movement path, indicating section 26 indicates the decided work order and movement path to operator 30. Here, indicating section 26, using communication interface 16, sends data showing the work order and movement path to electronic communication terminal 32 carried by operator 30. By this, the work order and movement path are displayed on the display of electronic communication terminal 32 or are relayed to operator 30 using sound. Here, indicating section 26 may indicate only the work order, it is not necessary for indicating section 26 to indicate the movement path. Further, it is not necessary for indicating section 26 to indicate all work orders, so long as indicating section 26 indicates the first production device 50 from which operator 30 should collect waste material.

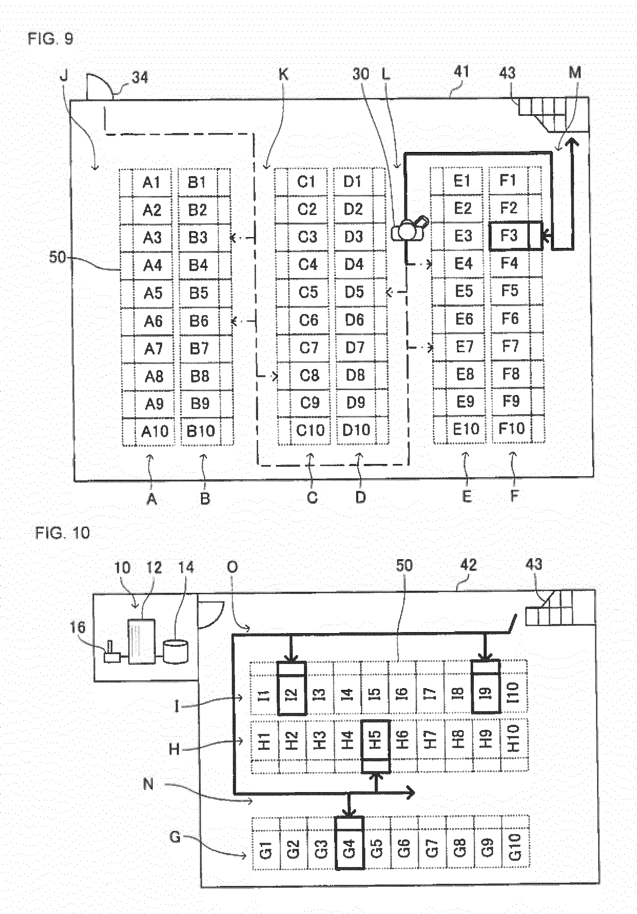

There are cases when it is necessary to newly collect waste material from a single or multiple production devices 50 while operator 30 is performing work as indicated. That is, there are cases in which a single or multiple production devices 50 start sending the first signal. In this case, selecting section 22 newly selects the single or multiple production devices 50 as work targets, and order determining section 24 redetermines the work order and movement path for the work target production devices 50 at that point. For example, as shown in figs. 9 and 10, production device 50 positioned at F3 newly starts to send the first signal, and at that point, operator 30 has completed up to the work for production device 50 positioned at E4. In this case, order determining section 24, using the position of production device 50 positioned at E4 as an origin, performs processing to determine the work order and movement path for production devices 50 positioned at F3, G4, H5,12, and 19. Accordingly, because the work order and movement path are updated in a timely manner, it is possible for operator 30 to perform work of collecting waste material efficiently.

There are cases in which work by operator 30 becomes delayed with respect to the plan while operator 30 is performing work as indicated. In this case, waste material may not be collected within the above first specified time for a production device 50. Because of this, order determining section 24 performs correction of the work order and movement path after the second specified time (for example, nine minutes), which is shorter than the first specified time from the sending of the first signal from each of the work target production devices 50. As an example, in a work order after correction, a production device 50 for which the second specified time has elapsed is determined as the first work target.

Details of specific examples of the present invention are described above, but these are merely examples and in no way restrict the claims of the invention. The techniques disclosed in the claims include various changes and modifications to the specific examples illustrated above.

For example, indications to operator 30 of the work order and/or the movement path are not restricted to electronic communication terminal 32 of operator 30, and may be performed by various other methods, such as display on touch panel 70 of production device 50, broadcast inside the factory, distribution of printed matter to operator 30, and so on.

The technology described in the embodiment is not limited to a production system for surface mounted component boards and may be applied to a wide range of production systems that produce industrial products. Regardless of the type of industrial product produced, by applying the technology disclosed herein, operator 30 is able to efficiently collect waste material from multiple production devices 50 that configure a production system.

The technical elements described in this specification and the figures can exhibit technical utility alone or in various combinations, and are not limited to the combination disclosed in the claims at the time of application. Also, the examples of the technology in this specification and the figures achieves multiple purposes at the same time but can also exhibit technical utility by achieving one among those purposes.

### [Reference Signs List]

2: circuit board; 4: electronic component; 6: waste tape; 8: tape reel; 10: assisting device; 12: processing device; 14: storage device; 16: communication interface; 22: selecting section; 24: order determining section; 26: indicating section: 30: operator; 32: electronic communication terminal; 50: production device; 62: waste material box; 64: sensor

## Claims

1. An assisting device (10) configured to assist an operator (30) to collect waste material (6, 8) from multiple production devices (50) that configure a production system for industrial products, the assisting device (10) comprising: a selecting means (22) configured to select work target production devices (50), from which the operator (30) should collect waste material (6, 8), from among the multiple production devices (50), based on a signal sent from each of the production devices (50), wherein the signal sent from the production device (50) includes a signal corresponding to an amount of waste material (6, 8) accumulated in the production device (50); an order determining means (24) configured to determine at least a portion of a work order in which the operator (30) should collect waste material (6, 8) of the work target production devices (50) selected by the selecting means (22); and an indicating means (26) configured to indicate to the operator (30) at least a portion of the work order determined by the order determining means (24).

2. The assisting device according to claim 1, wherein
the signal sent from the production device includes a first signal when the amount of waste material accumulated in the production device exceeds a first specified amount, and
the selecting means selects the production device sending the first signal as the work target production device.

3. The assisting device according to claim 2, wherein
the signal sent from the production device includes a second signal when the amount of waste material accumulated in the production device is less than the first specified amount and exceeds a second specified amount, and the selecting means also selects, from among the production devices sending the second signal, the production device with a specified positional relationship with respect to the previously selected production device as the work target production device.

4. The assisting device according to claim 2 or 3, wherein
the signal sent from the production device includes a second signal when the amount of waste material accumulated in the production device is less than the first specified amount and exceeds a second specified amount, and the selecting means also selects, from among the production devices sending the second signal, the production device on a movement path of an operator decided from the work order as the work target production device.

5. The assisting device according to any one of the claims 1 to 4, wherein the order determining means, from among the work target production devices, determines at least the production device from which the operator should collect waste material first.

6. The assisting device according to any one of the claims 1 to 5, wherein the order determining means stores arrangement information that contains the positional relationship between the multiple production devices, and determines the order using the arrangement information.

7. The assisting device according to claim 6, wherein
the order determining means determines the work order such that a movement distance or movement time of the operator is minimized.

8. The assisting device according to claim 6 or 7, wherein the order determining means determines the work order such that a planned arrival time of the operator is within a first specified time from the sending of the signal from each of the work target production devices.

9. The assisting device according to claim 8, wherein
the order determining means performs correction of the work order when a second specified time has elapsed, the second specified time being shorter than the first specified time from the sending of the signal from each of the work target production devices.

10. The assisting device according to any one of the claims 1 to 9, wherein the order determining means redetermines the work order when the selecting means newly selects the work target production device.

11. The assisting device according to any one of the claims 1 to 10, wherein the order determining means stores a reference position of the operator and determines the work order using the reference position as an origin.

12. The assisting device according to any one of the claims 1 to 11, wherein the order determining means detects or estimates the actual position of the operator and determines the work order using the estimated or detected actual position as an origin.

13. The assisting device according to any one of the claims 1 to 12, wherein the order determining means further determines a movement path of the operator with respect to at least a portion of the work order, and the indicating means further indicates the movement path determined by the order determining means.

14. The assisting device according to any one of the claims 1 to 13, wherein
the industrial products are surface mounted component boards, which are circuit boards mounted with multiple electronic components, and
the multiple production devices include at least one component mounting device.

15. A method for assisting an operator (30) to collect waste material (6, 8) from multiple production devices (50) that configure a production system for industrial products, the method comprising:
selecting work target production devices (50), from which the operator (30) should collect waste material (6, 8), from among the multiple production devices (50), based on a signal sent from each of the production devices (50), wherein the signal sent from the production device (50) includes a signal corresponding to an amount of waste material (6, 8) accumulated in the production device (50);
determining at least a portion of a work order in which the operator (30) should collect waste material (6, 8) of the selected work target production devices (50); and
indicating to the operator (30) at least a portion of the determined work order.

## Patentansprüche

1. Hilfsvorrichtung (10), die konfiguriert ist zum Unterstützen eines Arbeiters (30) beim Sammeln von Abfallmaterial (6, 8) von mehreren Produktionsvorrichtungen (50), die ein Produktionssystem für Industrieprodukte bilden, wobei die Hilfsvorrichtung umfasst:
eine Auswahleinrichtung (22), die konfiguriert ist zum Auswählen von Arbeitsziel-Produktionsvorrichtungen (50), von denen der Arbeiter (30) Abfallmaterial (6, 8) sammeln soll, aus den mehreren Produktionsvorrichtungen (50) basierend auf einem von jeder der Produktionsvorrichtungen (50) gesendeten Signal, wobei das von der Produktionsvorrichtung (50) gesendete Signal ein Signal in Entsprechung zu der Menge des in der Produktionsvorrichtung (50) angesammelten Abfallmaterials (6, 8) enthält,
eine Reihenfolgenbestimmungseinrichtung (24), die konfiguriert ist zum Bestimmen wenigstens eines Teils einer Arbeitsreihenfolge, mit welcher der Arbeiter (30) Abfallmaterial (6, 8) der durch die Auswahleinrichtung (22) ausgewählten Arbeitsziel-Produktionsvorrichtungen (50) sammeln soll, und
eine Angabeeinrichtung (26), die konfiguriert ist zum Angeben, für den Arbeiter (30), wenigstens eines Teils der durch die Reihenfolgenbestimmungseinrichtung (24) bestimmten Arbeitsreihenfolge.

2. Hilfsvorrichtung nach Anspruch 1, wobei:
das von der Produktionsvorrichtung gesendete Signal ein erstes Signal enthält, wenn die Menge des in der Produktionsvorrichtung angesammelten Abfallmaterials eine erste spezifizierte Menge überschreitet, und
die Auswahleinrichtung die das erste Signal sendende Produktionsvorrichtung als die Arbeitsziel-Produktionsvorrichtung auswählt.

3. Hilfsvorrichtung nach Anspruch 2, wobei:
das von der Produktionsvorrichtung gesendete Signal ein zweites Signal enthält, wenn die Menge des in der Produktionsvorrichtung angesammelten Abfallmaterials kleiner als die erste spezifizierte Menge ist und eine zweite spezifizierte Menge übersteigt, und die Auswahleinrichtung weiterhin aus den das zweite Signal sendenden Produktionsvorrichtungen die Produktionsvorrichtung mit einer spezifizierten Positionsbeziehung in Bezug auf die zuvor ausgewählte Produktionsvorrichtung als die Arbeitsziel-Produktionsvorrichtung auswählt.

4. Hilfsvorrichtung nach Anspruch 2 oder 3, wobei:
das von der Produktionsvorrichtung gesendete Signal ein zweites Signal enthält, wenn die Menge des in der Produktionsvorrichtung angesammelten Abfallmaterials kleiner als die erste spezifizierte Menge ist und eine zweite spezifizierte Menge übersteigt, und die Auswahleinrichtung weiterhin aus den das zweite Signal sendenden Produktionsvorrichtungen die Produktionsvorrichtung an einem Bewegungspfad eines Arbeiters, der aus der Arbeitsreihenfolge bestimmt wird, als die Arbeitsziel-Produktionsvorrichtung auswählt.

5. Hilfsvorrichtung nach einem der Ansprüche 1 bis 4, wobei die Reihenfolgenbestimmungseinrichtung aus den Arbeitsziel-Produktionsvorrichtungen wenigstens die Produktionsvorrichtung bestimmt, von welcher der Arbeiter zuerst Material sammeln soll.

6. Hilfsvorrichtung nach einem der Ansprüche 1 bis 5, wobei die Reihenfolgenbestimmungseinrichtung Anordnungsinformationen speichert, die die Positionsbeziehung zwischen den mehreren Produktionsvorrichtungen enthalten, und die Reihenfolge unter Verwendung der Anordnungsinformationen bestimmt.

7. Hilfsvorrichtung nach Anspruch 6, wobei die Reihenfolgenbestimmungseinrichtung die Arbeitsreihenfolge derart bestimmt, dass die Bewegungsdistanz oder die Bewegungszeit des Arbeiters minimiert wird.

8. Hilfsvorrichtung nach Anspruch 6 oder 7, wobei die Reihenfolgenbestimmungseinrichtung die Arbeitsreihenfolge derart bestimmt, dass eine geplante Ankunftszeit des Arbeiters innerhalb einer ersten spezifizierten Zeit seit dem Senden des Signals von jeder der Arbeitsziel-Produktionsvorrichtungen liegt.

9. Hilfsvorrichtung nach Anspruch 8, wobei die Reihenfolgenbestimmungseinrichtung eine Korrektur der Arbeitsreihenfolge durchführt, wenn eine zweite spezifizierte Zeit abgelaufen ist, wobei die zweite spezifizierte Zeit kürzer als die erste spezifizierte Zeit seit dem Senden des Signals von jeder der Arbeitsziel-Produktionsvorrichtungen ist.

10. Hilfsvorrichtung nach einem der Ansprüche 1 bis 9, wobei die Reihenfolgenbestimmungseinrichtung die Arbeitsreihenfolge erneut bestimmt, wenn die Auswahleinrichtung die Arbeitsziel-Produktionsvorrichtung neu auswählt.

11. Hilfsvorrichtung nach einem der Ansprüche 1 bis 10, wobei die Reihenfolgenbestimmungseinrichtung eine Referenzposition des Arbeiters speichert und die Arbeitsreihenfolge unter Verwendung der Referenzposition als eines Ursprungs bestimmt.

12. Hilfsvorrichtung nach einem der Ansprüche 1 bis 11, wobei die Reihenfolgenbestimmungseinrichtung die tatsächliche Position des Bedieners schätzt und die Arbeitsreihenfolge unter Verwendung der geschätzten oder tatsächlichen Position als eines Ursprungs bestimmt.

13. Hilfsvorrichtung nach einem der Ansprüche 1 bis 12, wobei die Reihenfolgenbestimmungseinrichtung weiterhin einen Bewegungspfad des Arbeiters in Bezug auf wenigstens einen Teil der Arbeitsreihenfolge bestimmt und die Angabeeinrichtung weiterhin den durch die Reihenfolgebestimmungseinrichtung bestimmten Bewegungspfad angibt.

14. Hilfsvorrichtung nach einem der Ansprüche 1 bis 13, wobei:
die Industrieprodukte Leiterplatten für oberflächenmontierte Bauelemente sind, auf denen mehrere elektronische Bauelemente montiert werden, und
die mehreren Produktionsvorrichtungen wenigstens eine Bauelement-Montagevorrichtung umfassen.

15. Verfahren zum Unterstützen eines Arbeiters (30) beim Sammeln von Abfallmaterial (6, 8) von mehreren Produktionsvorrichtungen (50), die ein Produktionssystem für Industrieprodukte bilden, wobei das Verfahren umfasst:
Auswählen von Arbeitsziel-Produktionsvorrichtungen (50), von denen der Arbeiter (30) Abfallmaterial (6, 8) sammeln sollte, aus den mehreren Produktionsvorrichtungen (50) basierend auf einem von jeder der Produktionsvorrichtungen (50) gesendeten Signal, wobei das von der Produktionsvorrichtung (50) gesendete Signal ein Signal in Entsprechung zu der Menge des in der Produktionsvorrichtung (50) angesammelten Abfallmaterials (6, 8) enthält,
Bestimmen wenigstens eines Teils einer Arbeitsreihenfolge, mit welcher der Arbeiter (30) Abfallmaterial (6, 8) der ausgewählten Arbeitsziel-Produktionsvorrichtungen (50) sammeln soll, und
Angeben, für den Arbeiter (30), wenigstens eines Teils der bestimmten Arbeitsreihenfolge.

## Revendications

1. Dispositif d'aide (10) configuré pour aider un opérateur (30) à collecter des déchets (6, 8) provenant de multiples dispositifs de production (50) qui forment un système de production de produits industriels, le dispositif d'aide (10) comportant :
un moyen de sélection (22) configuré pour sélectionner, parmi les multiples dispositifs de production (50), des dispositifs de production cibles (50) auprès desquels l'opérateur (30) devrait collecter des déchets (6, 8) en se fondant sur un signal envoyé par chacun des dispositifs de production (50), où le signal envoyé par le dispositif de production (50) comprend un signal correspondant à une quantité de déchets (6, 8) accumulés dans le dispositif de production (50) ;
un moyen de détermination d'ordre (24) configuré pour déterminer au moins une partie d'un ordre de travail dans lequel l'opérateur (30) devrait collecter les déchets (6, 8) du dispositif de production cible (50) sélectionné par le moyen de sélection (22) ; et
un moyen d'indication (26) configuré pour indiquer à l'opérateur (30) au moins une partie de l'ordre de travail déterminé par le moyen de détermination d'ordre (24).

2. Dispositif d'aide selon la revendication 1, où
le signal envoyé par le dispositif de production comprend un premier signal quand la quantité de déchets accumulés dans le dispositif de production dépasse une première quantité spécifiée, et
le moyen de sélection sélectionne le dispositif de production envoyant le premier signal en tant que dispositif de production cible.

3. Dispositif d'aide selon la revendication 2, où
le signal envoyé par le dispositif de production comprend un second signal quand la quantité de déchets accumulés dans le dispositif de production est inférieure à la première quantité spécifiée et dépasse une seconde quantité spécifiée, et le moyen de sélection sélectionne également, parmi les dispositifs de production envoyant le second signal, le dispositif de production ayant une relation de positionnement spécifiée par rapport au dispositif de production précédemment sélectionné en tant que dispositif de production cible.

4. Dispositif d'aide selon la revendication 2 ou 3, où
le signal envoyé par le dispositif de production comprend un second signal quand la quantité de déchets accumulés dans le dispositif de production est inférieure à la première quantité spécifiée et dépasse une seconde quantité spécifiée, et le moyen de sélection sélectionne également, parmi les dispositifs de production envoyant le second signal, le dispositif de production se trouvant sur un chemin de déplacement d'un opérateur, décidé à partir d'un ordre de travail, en tant que dispositif de production cible.

5. Dispositif d'aide selon l'une quelconque des revendications 1 à 4, où le moyen de détermination d'ordre détermine, parmi les dispositifs de production cibles, au moins le dispositif de production auprès duquel l'opérateur devrait collecter les déchets en premier.

6. Dispositif d'aide selon l'une quelconque des revendications 1 à 5, où le moyen de détermination d'ordre stocke des informations d'agencement qui contiennent les relations de position entre les multiples dispositifs de production, et détermine l'ordre en utilisant les informations d'agencement.

7. Dispositif d'aide selon la revendication 6, où
le moyen de détermination d'ordre détermine l'ordre de travail de telle manière qu'une distance de déplacement ou un temps de déplacement de l'opérateur est minimisé.

8. Dispositif d'aide selon la revendication 6 ou 7, où le moyen de détermination d'ordre détermine l'ordre de travail de telle manière qu'un temps d'arrivée planifié de l'opérateur est inférieur à un premier temps spécifié s'écoulant à partir de l'envoi du signal par chacun des dispositifs de production cibles.

9. Dispositif d'aide selon la revendication 8, où
le moyen de détermination d'ordre effectue une correction de l'ordre de travail quand un second temps spécifié est écoulé, le second temps spécifié étant plus court que le premier temps spécifié s'écoulant à partir de l'envoi du signal par chacun des dispositifs de production cibles.

10. Dispositif d'aide selon l'une quelconque des revendications 1 à 9, où le moyen de détermination d'ordre redétermine l'ordre de travail quand le moyen de sélection sélectionne à nouveau le dispositif de production cible.

11. Dispositif d'aide selon l'une quelconque des revendications 1 à 10, où le moyen de détermination d'ordre stocke une position de référence de l'opérateur et détermine l'ordre de travail en utilisant la position de référence comme point d'origine.

12. Dispositif d'aide selon l'une quelconque des revendications 1 à 11, où le moyen de détermination d'ordre détecte ou estime la position réelle de l'opérateur et détermine l'ordre de travail en utilisant la position réelle estimée ou détectée comme point d'origine.

13. Dispositif d'aide selon l'une quelconque des revendications 1 à 12, où le moyen de détermination d'ordre détermine en outre un chemin de déplacement de l'opérateur par rapport à au moins une partie de l'ordre de travail, et le moyen d'indication indique en outre le chemin de déplacement déterminé par le moyen de détermination d'ordre.

14. Dispositif d'aide selon l'une quelconque des revendications 1 à 13, où
les produits industriels sont des cartes de composants montés en surface, c'est-à-dire des cartes de circuit imprimé sur lesquels sont montés de multiples composants électroniques, et
les multiples dispositifs de production comprennent au moins un dispositif de montage de composants.

15. Procédé pour aider un opérateur (30) à collecter des déchets (6, 8) provenant de multiples dispositifs de production (50) qui forment un système de production de produits industriels, le procédé comportant les actions consistant à :
sélectionner, parmi les multiples dispositifs de production (50), des dispositifs de production cibles (50) auprès desquels l'opérateur (30) devrait collecter des déchets (6, 8) en se fondant sur un signal envoyé par chacun des dispositifs de production (50), où le signal envoyé par le dispositif de production (50) comprend un signal correspondant à une quantité de déchets (6, 8) accumulés dans le dispositif de production (50) ;
déterminer au moins une partie d'un ordre de travail dans lequel l'opérateur (30) devrait collecter les déchets (6, 8) du dispositif de production cible (50) sélectionné ; et
indiquer à l'opérateur (30) au moins une partie de l'ordre de travail déterminé.
